(19) Europäisches Patentamt
European Patent Office
Office européen des brevets

(11) EP 0 551 516 B1

(12) **EUROPEAN PATENT SPECIFICATION**

(45) Date of publication and mention
of the grant of the patent:
**03.11.1999 Bulletin 1999/44**

(51) Int Cl.6: **F16C 19/38**, F16D 41/06,
F16C 33/58

(21) Application number: **91914451.9**

(22) Date of filing: **09.08.1991**

(86) International application number:
**PCT/JP91/01072**

(87) International publication number:
**WO 93/03287 (18.02.1993 Gazette 1993/05)**

(54) **ROLLER BEARING**

ROLLENLAGER

ROULEMENT A ROULEAUX

(84) Designated Contracting States:
**AT CH DE ES FR GB IT LI NL SE**

(43) Date of publication of application:
**21.07.1993 Bulletin 1993/29**

(73) Proprietor: **THK CO., LTD.**
**Shinagawa-ku, Tokyo 141-0031 (JP)**

(72) Inventor: **Takata, Nobuo**
**Yao-shi, Osaka 581 (JP)**

(74) Representative: **Riedel, Peter, Dipl.-Ing. et al**
**Patent- und Rechtsanwalts-Kanzlei,**
**Dipl.-Ing. W. Jackisch & Partner,**
**Menzelstrasse 40**
**70192 Stuttgart (DE)**

(56) References cited:
**DE-A- 1 915 516**            **GB-A- 324 792**
**JP-Y- 57 017 132**

**Description**

This invention relates to an antifriction roller bearing.

GB-A-324,792 discloses in Fig. 12 a free wheel or unidirectional clutch with an outer driving member and an inner driven member coupled by an intermediate floating member and rolling bodies. The intermediate floating member and the inner driven member have, respectively, convex and concave surfaces forming a raceway for the rolling bodies which are positioned therein with their axes slanting to a plane including the axis of the clutch. A spring is provided, tending to force the intermediate floating member in an axial direction of the clutch into the engaged position. When the driven member overruns the driving member, the intermediate floating member is moved against the action of the spring by the axial component of the frictional resistance between the rolling bodies and their contacting surfaces, thereby disengaging the clutch members. Connected to the intermediate floating member is an end plate for the rolling bodies which end plate is provided at the large end of the raceway.

There are known, in general, three types of antifriction roller bearings, namely cylindrical roller bearings, conical roller bearings and self-aligning roller bearings.

Cylindrical rollers are in line contact with the inner and outer rings of the bearing, and a radial load applied on the bearing produces only normal loads on the contact portions.

Conical roller bearings and self-aligning roller bearings are characterized in that a radial load produces a normal load acting on the slanted surface and a tangential load acting in parallel to the slanting surface. However, since a thrust load is always applied to those bearings to prevent the inner and outer rings from displacing in the axial direction, an additional normal component of the thrust force is applied between the rings and the rollers, thus producing an additional surface contact pressure. Since furthermore the normal load acting between the rings and rollers tends to push the rollers out of the raceway from the smaller diameter side to the larger side of the raceway, a guide flange must be provided at the larger diameter side to prevent the rollers from being driven out of the raceway. However, since the large diameter end face of the conical rollers is in sliding contact with the guide flange, the PV value, i. e. the product of surface pressure P and velocity V, contributed by the sliding friction, largely restricts the load carrying capacity of the conical type roller bearings.

Antifriction roller bearings are often used where a shaft or a journal is rotated in both normal and reverse directions, but, depending on the type of machinery, also in cases where a shaft or a journal is rotated only in one direction.

The present invention provides an antifriction roller bearing which can be widely used in a variety of machinery, with a larger load capacity than the conventional cylindrical and conical roller bearings and an enhanced rolling performance without producing such a large sliding friction at the large diameter end face of the rollers as experienced in the conical roller bearing, as well as with a high bearing efficiency without any risk of bearing seizure, which makes this bearing most suitable for high speed rotation.

The present invention relates to improvements of antifriction bearings with cylindrical or conical rolling bodies which are positioned between an inner and an outer ring in a raceway with their contact lines slanting to a plane including the axis of the bearing.

According to the invention, the antifriction roller bearing comprises:

two sets of single units each consisting of an inner ring, an outer ring and intermediate rolling bodies having a cylindrical or conical rolling surface, and one set of pushing means acting on said inner ring or said outer ring;

said inner ring being provided with an inner raceway track being a mono-hyperboloid of revolution about an axis;

said outer ring being provided with an outer raceway track being a mono-hyperboloid of revolution about said axis;

said inner raceway track and said outer raceway track being faced opposite to each other to form a raceway whose diameter is larger at one end than at the other end;

the center axis of said intermediate rolling bodies being arranged in a circumferential direction of said raceway at an angle to a plane including said axis, and the surface of said intermediate rolling bodies being arranged so as to come into linear contact with said inner raceway track and said outer raceway track;

said inner ring or said outer ring rotating only in such a given direction as to roll said intermediate rolling bodies along said inner raceway track in said one-axis direction towards a small-diameter end of said raceway;

said inner ring being provided with a ringlike portion at the small diameter end thereof to stop movements of said intermediate rolling bodies towards said small-diameter end;

said two single units being arranged so as to face each other in said one-axis direction;

said pushing means being arranged between said inner rings or said outer rings facing each other in said one-axis direction, to push said inner rings or said outer rings in said axial direction so as to narrow down the spacing of said raceway tracks; and

said outer rings or said inner rings which are not pushed by said pushing means being stationary so as not to displace in said axial direction.

Since both the inner and outer raceway tracks are in the shape of mono-hyperboloids of revolution, the raceway formed of these tracks has a diameter which at one axial end is larger than at the other end. Since furthermore the intermediate rolling bodies are arranged with their contact lines slanting with respect to a plane including the center axis of the bearing, the intermediate rolling bodies will, during rotation of the inner or outer rings, not only roll on the inner and outer ring raceway tracks while keeping line contact with and being guided by them, but also will tend to advance in the axial direction. However, since the senses of the advancements of the intermediate rolling bodies at the inner and outer raceway tracks are opposite to each other, the inner rings and the outer rings would be separated from each other in the axial direction by the intermediate rolling bodies.

In this case, since the inner rings (or the outer rings) are to be rotated in a given direction which will cause the intermediate rolling bodies to be moved on the inner ring raceway tracks toward the smaller diameter ends, the above-mentioned separation force tends to move the inner rings to the larger diameter ends of the raceway and the outer rings to the smaller diameter ends, thus invariably resulting in the generation of an action which tends to widen the gap of the raceway.

On the other hand, the single units of the bearing each including the inner and outer ring and the intermediate rolling bodies are disposed opposite to each other in the axial direction, and one pair of the outer rings (or the inner rings) facing each other are fixed together to a bearing assembly case with the other pair being forced in the axial direction by the pushing means so as to narrow the gap of the raceway. Therefore, the above separation force cannot separate the inner rings and outer rings from each other, resulting in a rotation of the intermediate rolling bodies floating on the raceway tracks while the inner rings (or the outer rings) are being subjected to a separation force of one sense and a force of the opposite sense.

Therefore, the intermediate rolling bodies would be subjected to forces each in opposite senses of the axial direction from the inner and outer rings as a reaction of a force by which the inner and outer rings tend to be separated away from each other. If the magnitude of the opposite forces are different, the intermediate rolling bodies may tend to move in the axial direction. When the intermediate rolling bodies are of conical shape, they may be subjected to an additional force pushing them out from the smaller diameter end to the larger diameter end, thus resulting in an axial movement depending on which force is larger. The ringlike portions or the flanges on the inner rings end or the outer ring end are provided to bring such a movement of the intermediate rolling bodies to a stop in position, thus preventing them from being driven away from the raceway.

Furthermore, the magnitude of the above separation force produced on the contact line of the intermediate rolling bodies with the inner and outer rings depends on the contact condition. In other words, since convex portions of the intermediate rolling bodies are in contact with convex portions of the inner rings while being in contact with concaved portions of the outer rings, the contact surface pressure produced when a radial load is applied on the bearing assembly may be larger at the side of the inner raceway track, thus producing a larger separation force on the inner raceway track. As a result, intermediate rolling bodies of cylindrical shape are caused by the differential separation force to slide in the axial direction against the ringlike flange and to stop there, so that the differential force acts between the intermediate rolling bodies and the flanges as contact surface pressure. However, this differential pressure is not large enough to cause friction problems at the contact portions.

On the other hand, intermediate rolling bodies of conical shape are, as has been described previously, subjected to a push-out force caused by the pressure at the contact portions. The contact pressure is, however, reduced by the separation force, which acts in an opposite direction to that of the push-out force. Therefore, no large contact surface pressure will be produced between the intermediate rolling bodies and the ringlike flanges.

In the following some preferred embodiments of the antifriction roller bearing according to the present invention will be described with reference to the accompanying drawings in which:

Fig. 1 is a sectional view showing an embodiment of the antifriction roller bearing;

Figs. 2 and 3 are perspective views showing the arrangement of the main components and the rollers in the above embodiment;

Figs. 4 and 5 are schematic diagrams showing the relation of forces acting in the antifriction roller bearing;

Fig. 6 is a sectional view showing another embodiment of the antifriction roller bearing according to the invention;

Figs. 7 to 9 are schematic diagrams showing how to determine the shape of the raceway track surface of the embodiment shown in Fig. 6;

Fig. 10 is a sectional view showing a further embodiment of the antifriction roller bearing according to the invention; and

Fig. 11 shows how forces act on the rollers in the embodiment shown in Fig. 10.

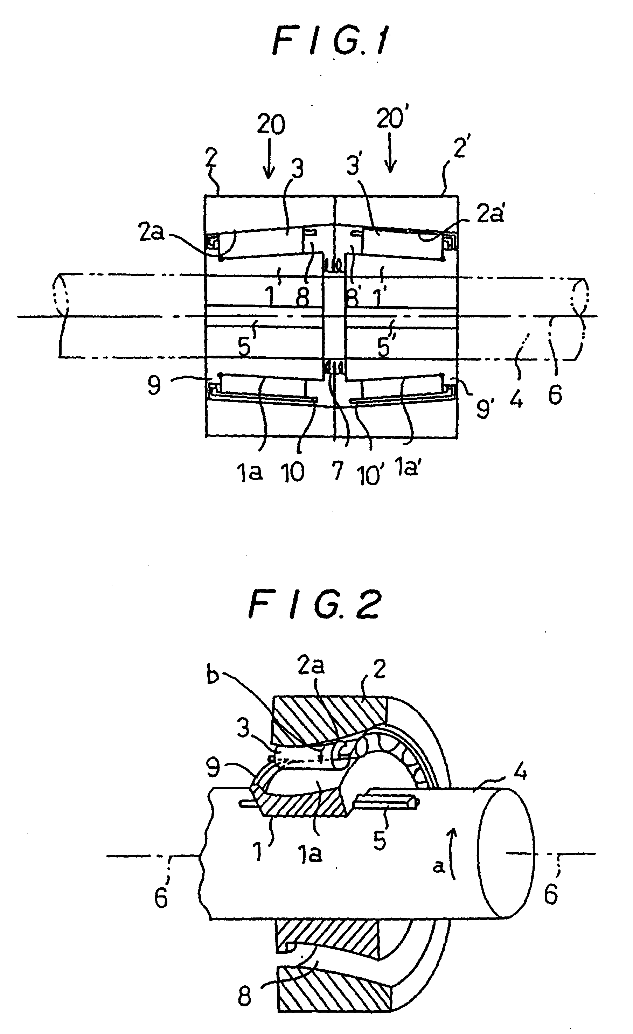

First, the configuration of an antifriction roller bearing according to the present invention will be described using the sectional and perspective views shown in Figs. 1 to 3.

A single unit 20 (or 20') of an antifriction roller bearing includes an inner ring 1 (or 1'), an outer ring 2 (or 2') and intermediate rolling bodies or rollers 3 (or 3'). This antifriction roller bearing assembly according to the invention consists of at least one set of the two single units 20 and 20' facing each other. Since the two units are of the same configuration, only the single unit 20 will be described in detail.

The inner ring 1 may be mounted on a shaft 4 by engagement of a key 5. An inner raceway track la and an outer raceway track 2a form a raceway 8 for the rollers 3.

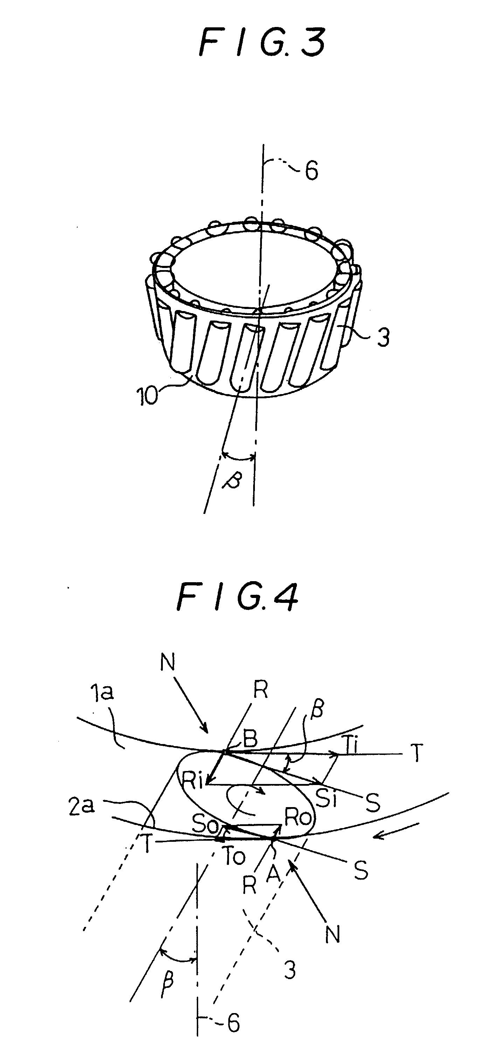

A plurality of the rollers 3 are of cylindrical shape, and as shown in Fig. 3, are disposed in the raceway 8 such that they slant to a plane including the central axis 6 of the inner ring 1 at an angle β of e. g. 15°.

A spring 7 used as pushing means is disposed between the inner rings 1, 1', tending to push them away permanently so as to narrow the gap of the raceway 8 or to separate the inner rings 1, 1' from each other.

The inner ring 1 is provided with a ringlike flange 9 to restrict an axial movement of the rollers 3 when the inner ring 1 is rotating and the rollers 3 rotate about their own axes to advance in the axial direction 6.

In Fig. 3, the rollers 3 are disposed on the inner ring 1 slanting to a plane including the central axis 6 of the inner ring 1 at an angle β. Each position of the rollers 3 is maintained by a retainer 10, thus avoiding their contact with each other. This configuration can prevent adjacent rollers rotating about their own axes in the same direction from running against each other with opposite tangential velocities, which results in their smooth rotations about their own axes and on the inner ring raceway track 1a.

The shaft 4 is invariably rotated in a given direction, in Fig. 2 in the clockwise direction viewed from the right as shown by the arrow a. When the shaft 4 rotates the inner ring 1 in the direction a, the rollers 3 are guided by the inner ring raceway la while keeping line contact with the inner ring raceway track la, so that they rotate about their own axes counterclockwise as shown by the arrow b and advance towards the left side in Fig. 2.

On the other hand, when the rollers 3 rotate in the b direction, the rollers 3 tend to advance to the right side, too, because they are also guided by the outer raceway track 2a while maintaining a line contact with the outer raceway track 2a.

Fig. 4 is a schematic diagram showing forces acting between the rollers 3 and the inner and outer rings 1 and 2 caused by the movement of the rollers 3 as described above:

Each of the rollers 3 makes a linear contact (strictly speaking, a plane contact with a small width) with the inner and outer raceway tracks 1a and 2a. For simplification, this linear contact is represented by contact points A and B on the contact planes. Since the axis 3a of a roller 3 is arranged slanting to a plane including the axis 6 by an angle of β, the rotational direction S of the rollers has a slant angle of β relative to directions T tangential to the raceways 1a and 2a. Therefore, when the rollers 3 are rotating on the raceways 1a and 2a, as shown in Fig. 3, the inner and outer rings 1, 2 would be subject to tangential force components Ti and To and to axial force components Ri and Ro.

The axial forces Ri and Ro tend to separate the inner and outer rings 1 and 2 from each other in opposite senses of the axial direction of the shaft 4. In this embodiment in which the position of the outer ring 2 is stationary, the inner ring 1 tends to move to the right in Figs. 1 and 2, so as to widen the gap of the raceway 8.

Such forces acting on the inner and outer rings 1 and 2 produce a balanced energizing force of the spring 7, thus causing the rollers 3 to float on the inner and outer rings 1 and 2, leading not only to a reduction of rolling contact surface pressure but also to a prevention of such troubles as smearing, galling and hardening of the surfaces in the overload condition.

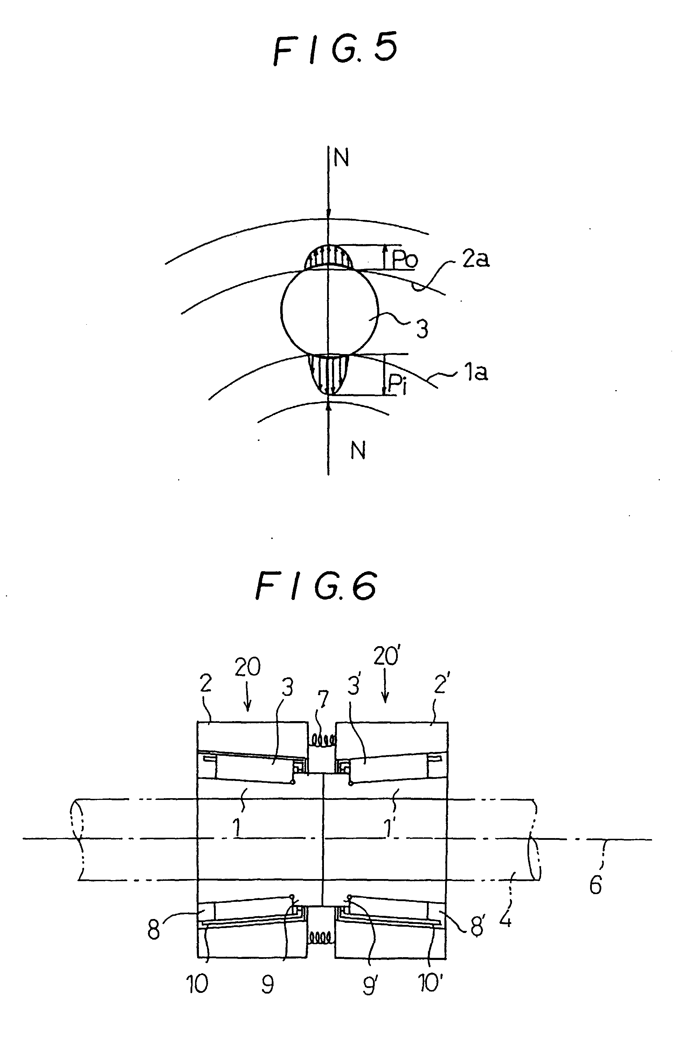

As for the surface contact of the rollers with the inner and outer rings 1 and 2, shown in Fig. 5, a convex portion of a roller 3 is in contact with a concave portion of the outer ring raceway track surface 2a, while a convex portion of the roller 3 is in contact with a convex portion of the inner ring raceway track surface la. As a result, the maximum contact surface pressure Pi on the inner ring 1 is larger than the maximum contact surface pressure Po on the outer ring 2. Therefore, in the contact portions of the rollers 3 with the inner and outer rings 1 and 2, the inner ring 1 causes a larger local concentrated strain than the outer ring 2. As a result, when the rollers 3 are rotating while applying a same normal force N on the inner and outer rings 1 and 2, a force component Ri of the rollers 3 tending to move the inner ring 1 in the axial direction is larger than a force component Ro of the rollers 3 tending to move the outer ring 2.

As reactions of such force components Ri and Ro, the rollers 3 would be subjected to forces -Ri and -Ro from the inner and outer rings 1 and 2 which are equal to Ri and Ro in magnitude and opposite in direction. As a result, the rollers 3 tend to advance to the left side (in Figs. 1 and 2) in the central axis 6 direction while guided by the inner ring raceway track la. In order to stop such a movement of the rollers 3, the ringlike flange 9 is provided on the inner ring 1 end portion as described previously.

In this case, the end faces of the rollers 3 come into sliding contact with the flange 9 while rotating about their own axes and in the raceway 8, but the contact force equals (Ri - Ro), thus remaining a small value, so that this sliding friction causes no significant troubles on the bearing.

Accordingly, this antifriction roller bearing according to the invention can solve such problems experienced in the conventional conical roller bearings, as for example seizures in the high speed rotation due to excessive PV value of the guide flange and failures associated with poor lubrication. Further, the minimized sliding friction loss and the capability of high speed rotation significantly reduce the mechanical loss of the bearing, thus leading to a substantial improvement of bearing efficiency.

Fig. 6 is a sectional view showing another embodiment of the antifriction roller bearing according to the invention:

The inner ring 1 is fixed on the shaft 4 to prevent an axial displacement of the inner ring 1, while the outer ring 2 can move in the axial direction with the spring 7 being provided between the outer rings 2 and 2'.

Therefore, when the shaft 4 is rotated in one given direction, the rollers 3 and 3' will also rotate being guided by the inner rings 1 and 1', thus causing the outer rings 2 and 2' to approach each other so as to widen the raceway gap. As a result, the rollers 3 and 3' will float on the inner rings 1 and 1' and in the outer rings 2 and 2', thus alleviating contact surface pressures between them. In all other respects the antifriction roller bearing is of the same configuration and function as the one shown in Fig. 1, so that further details will not be described.

In the following, the shapes of the inner and outer ring raceway tracks la and 2a required for their line contact with the rollers 3 will be described.

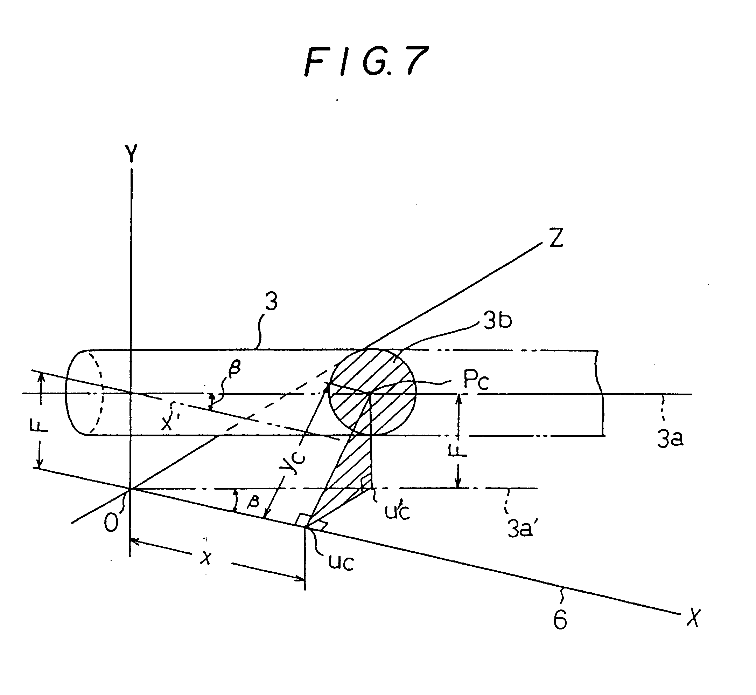

Figs. 7 to 9 are explanatory drawings for determining the shapes of the raceway track surface in the case of cylindrical rollers 3.

Fig. 7 is a perspective view showing X-Y-Z coordinates, in which a roller 3 is placed such that its axis 3a passes through the Y axis a distance F away from the origin O, in parallel to the X-Z plane, slanting to the X-Y plane at an angle of $\beta$. The X axis represents the common axis 6 of the inner and outer rings 1 and 2. The section 3b of the roller 3 shows a section cut by a plane parallel to the Y-Z plane passing the X axis at an arbitrary position x. Points Uc and U'c, respectively, are intersections with the X axis and the X-Z plane, of perpendiculars drawn from the center Pc of the cross section to the X axis and the X-Z plane. The line 3a' passing the origin O and the point U'c is a projected line of the roller axis 3a to the X-Z plane, forming an angle $\beta$ with the X axis. Referring to Fig. 7, it is:

Distance from Uc to U'c = x tan $\beta$
Distance from Pc to U'c = F

Therefore, designating a distance from the rotation axis 6 of the rings (or X axis) to the center Pc of the roller 3 as yc ($=\overline{PcUc}$),

$$yc^2 = F^2 + (x \tan \beta)^2 \qquad \text{Accordingly,}$$

$$yc^2 / F^2 - x^2 / (F / \tan \beta)^2 = 1 \qquad\qquad (1)$$

Since the equation (1) is a hyperbola, the axis line of the rollers 3, that is, the center line of the raceway formed with the inner and outer rings 1 and 2 is hyperbolic with respect to the rotation axis 6 of the rings.

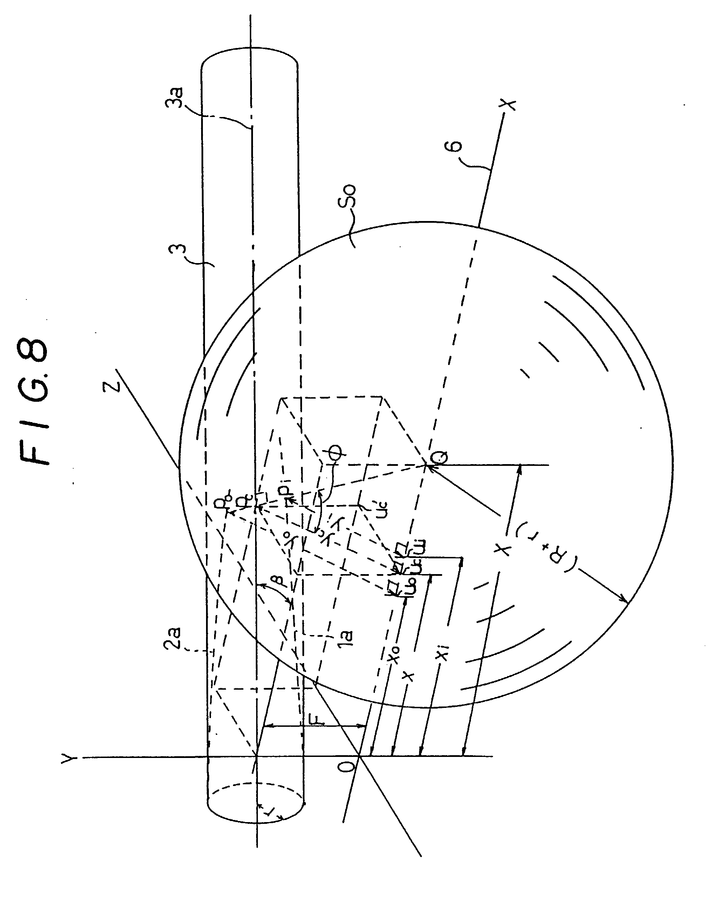

Fig. 8 is a drawing for explaining how the rings 1 and 2 come into contact with the roller 3 arranged as above.

Designate as Q an intersection of the axis X with a plane which passes the center Pc of the roller 3 at right angle with the axis 3a of the roller 3. Considering spheres Si and So (only So is shown in Fig. 8) having the same center Q, which are respectively inscribed and circumscribed to the rollers, contact points Pi and Po of the roller 3 with the spheres Si and So would be on a perpendicular connecting the points Q and Pc, respectively the radius r of the roller 3 apart from the point Pc. Therefore, designating the distance from point Q to point Pc as R, the radii of the spheres Si and So would be respectively (R-r) and (R+r).

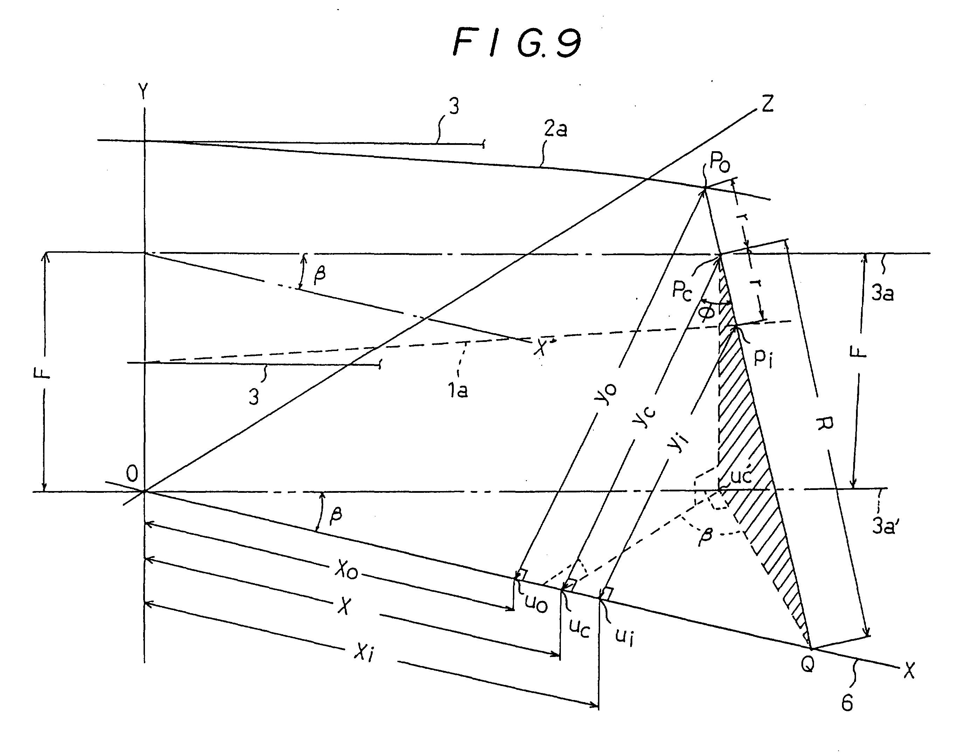

Designating as Ui and Uo the intersections of planes passing the points Pi and Po in parallel to the Y-Z plane with the X axis (see Fig. 9), the lengths yi and yo of the segments PiUi and PoUo are respectively distances from the points Pi and Po to the X axis, and the distances xi and xo from the origin O to the points Ui and Uo are respectively the X axis coordinates of the points Pi and Po. Therefore, functions F (xi, yi) and F (xo, yo) represent the curved surface shapes of the raceway tracks la and 2a of the inner and outer rings 1 and 2.

Fig. 9 is an enlarged view showing related portions to the determination of these functions.

Since segment QPc (equal to R) is at right angle with the center axis 3a of the roller 3, and the point U'c is an intersection of the perpendicular from the point Pc to the X-Z plane therewith, segment U'cQ is at right angle with the axis 3a'. Therefore,

Distance from point O to point Q

$$
\begin{aligned}
&= (x/\cos \beta)/\cos \beta = x/\cos^2 \beta \\
R^2 &= F^2 + \left\{ (x/\cos^2 \beta) \sin \beta \right\}^2 \\
&= F^2 + x^2 \tan^2 \beta/\cos^2 \beta
\end{aligned}
$$

Then, designating an angle QPcUc as $\phi$, since triangle QPcUc is a right angle,

$$
\cos \phi = \frac{yc}{R} = \frac{\sqrt{F^2 + x^2 \tan^2\beta}}{\sqrt{F^2 + x^2 \tan^2\beta / \cos^2\beta}}
$$

$$
\sin \phi = \frac{\overline{UcQ}}{R} = \frac{x \tan^2\beta}{\sqrt{F^2 + x^2 \tan^2\beta / \cos^2\beta}}
$$

On the other hand, since the length of segments PcPi and PcPo equal r, and triangles QPiUi and QPoUo are similar to triangle QPcUc,

$$
xi = x + r \sin \phi = x + xr \frac{\tan^2\beta}{\sqrt{F^2 + x^2 \tan^2\beta / \cos^2\beta}} \tag{2}
$$

$$
xo = x - r \sin \phi = x - xr \frac{\tan^2\beta}{\sqrt{F^2 + x^2 \tan^2\beta / \cos^2\beta}} \tag{3}
$$

$$
yi = yc - r \cos \phi = \sqrt{F^2 + x^2 \tan^2\beta}\left(1 - \frac{r}{\sqrt{F^2 + x^2 \tan^2\beta / \cos^2\beta}}\right) \tag{4}
$$

$$
yo = yc + r \cos \phi = \sqrt{F^2 + x^2 \tan^2\beta}\left(1 + \frac{r}{\sqrt{F^2 + x^2 \tan^2\beta / \cos^2\beta}}\right) \tag{5}
$$

From these above equations, F (xi, yi) and F (xo, yo) are introduced as follows:

$$yi = \frac{\sqrt{F^2 + x^2 \tan^2\beta}\left(1 - \dfrac{r}{\sqrt{F^2 + x^2 \tan^2\beta / \cos^2\beta}}\right)}{x\left(1 + \dfrac{r\tan^2\beta}{\sqrt{F^2 + x^2 \tan^2\beta / \cos^2\beta}}\right)} xi$$

$$yo = \frac{\sqrt{F^2 + x^2 \tan^2\beta}\left(1 + \dfrac{r}{\sqrt{F^2 + x^2 \tan^2\beta / \cos^2\beta}}\right)}{x\left(1 - \dfrac{r\tan^2\beta}{\sqrt{F^2 + x^2 \tan^2\beta / \cos^2\beta}}\right)} xo$$

These equations express only that the inner and outer raceway tracks 1a and 2a have shapes of quadratic curved surface. Obtaining ratios of (xi-x) / (yi-yc) and (xo-x) / (yo-yc), from the equations (2) to (5),

$$\frac{xi - x}{yi - yc} = \frac{r\sin\phi}{-r\cos\phi} = -\frac{x}{yc}\tan^2\beta$$

$$\frac{xo - x}{yo - yc} = \frac{-r\sin\phi}{r\cos\phi} = -\frac{x}{yc}\tan^2\beta$$

Since the relation of x and yc is hyperbolic from the equation (1), and **$\tan^2\beta$** in the above equation is constant, the relations of xi and yi as well as xo and yo are hyperbolic. As a result, the inner and outer raceway tracks 1a and 2a are mono-hyperboloids of revolution about the common axis 6.

Assuming for example

$$yi^2/ai^2 - xi^2/bi^2 = 1$$

$$yo^2/ao^2 - xo^2/bo^2 = 1$$

F = 9, r = 1.5, and β**=15°**, ai, bi, ao and bo are respectively calculated to be 7.5, 30.7, 10.5 and 36.2, thus giving the inner and outer raceway track surfaces as mono-hyperboloids.

In the following, an antifriction roller bearing assembly in which the bearing single unit has intermediate rolling bodies with a conical shape will be described:

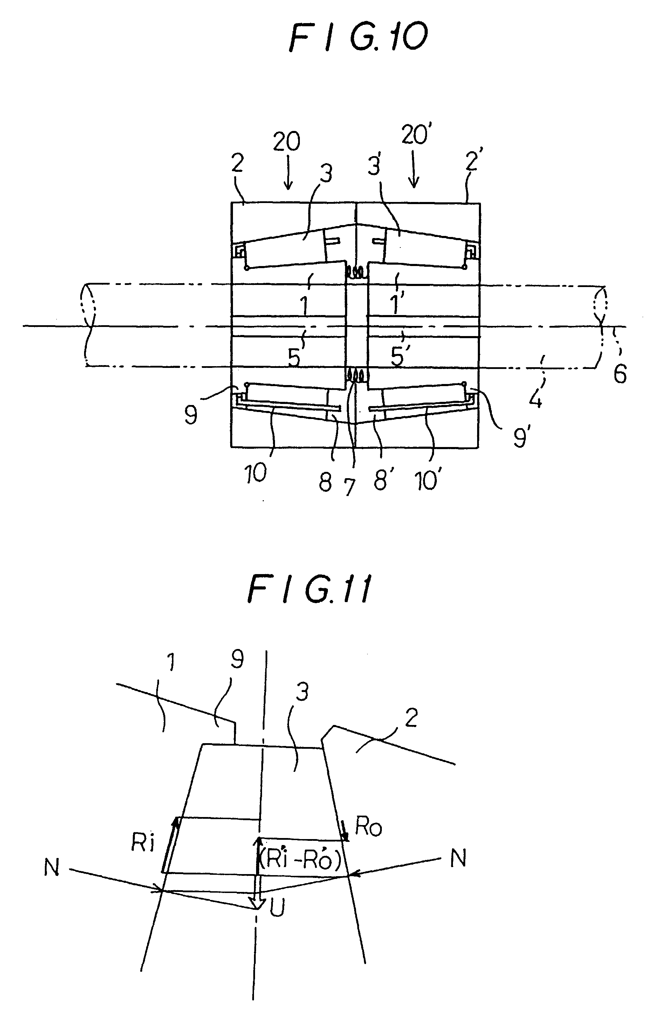

Fig. 10 is a sectional view showing an embodiment of the above antifriction roller bearing assembly, corresponding to Fig. 1. The assembly is different from the one in Fig. 1 only in that the rollers 3 and 3' are of conical instead of cylindrical shape.

By use of the conical rollers the rolling performance of the assembly is further enhanced.

As compared to the common cylindrical roller bearings, the conical roller bearings generally involve the problem of large sliding friction at the larger diameter sides of the rollers, which problem is solved by the antifriction roller bearing assembly according to the invention.

This solution will be described referring to Fig. 11, which is a schematic diagram showing how forces act on the rollers in the embodiment shown in Fig. 10.

As described previously, the rollers 3 and 3' are subjected to the axial components of forces -Ri and -Ro from the inner and outer rings 1 and 2. Since Ri > Ro, as shown in Fig. 11, the roller 3 is subject to an axial component of force (Ri' - Ro') which tends to displace the roller in the axial direction towards the small diameter end. Since the roller 3 is of conical shape, as shown in Fig. 11, the roller 3 is furthermore subjected to an axial component U of normal forces N acting on the contact surface, which tends to displace the roller in the axial direction towards the large diameter end.

As described above, the roller 3 may slide towards the smaller diameter end, depending on which force is larger, force (Ri' - Ro') or U. A ringlike flange 9 is provided on the side of the inner ring 1 towards which the roller 3 may displace. In the embodiment shown in Fig. 10, an assumption of (Ri' - Ro') > U is made, thus providing the flange 9 on the roller's small diameter side end of the inner ring 1.

As described above, in case of the conical roller bearing according to the invention, the large pull-out force U acting on the large diameter side end of the roller 3 in the prior art conical roller bearing is substantially reduced, thus permitting only an auxiliary flange to be provided on the small diameter end side of the roller 3, resulting in a smaller PV value due to the sliding friction which will not restrict the load carrying capability of the bearing.

Since the generator of conical roller is a slanting line, the shapes of the inner and outer ring raceway tracks in the conical roller bearing are also in the shape of mono-hyperboloid of revolution like the raceway tracks in the cylindrical roller bearings, but the hyperboloid is slanted by a line according to the slope of the conical roller.

In this connection, the bearing in Fig. 10 has a configuration corresponding to the one in Fig. 1, but may have a configuration corresponding to the one in Fig. 6.

In the above embodiments, the shaft 4 is connected to a power system and rotated with the inner rings 1. But, alternatively, the boss side (not shown) and the outer rings 2 may be rotated.

As described above in detail, the effect of the antifriction roller bearing according to the present invention is as follows.

The intermediate rolling bodies are arranged slanting to the inner and outer rings so as to have a line contact with the raceway tracks, the inner and outer rings are separated so as to have the intermediate rolling bodies float from them, and the axial movements of the intermediate rolling bodies are uniformed. Therefore, the antifriction roller bearing according to the invention improves the bearing load carrying capability and the rolling performance, thus minimizing the sliding friction, resulting in not only prevention of the occurrence of failures associated with seizure or poor lubrication, but also a high bearing efficiency most suitable for high speed rotation.

## Claims

1. An antifriction roller bearing comprising:

   two sets of single units (20; 21) each consisting of an inner ring (1; 1'), an outer ring (2; 2') and intermediate rolling bodies (3) having a cylindrical or conical rolling surface, and one set of pushing means (7) acting on said inner ring (1; 1') or said outer ring (2; 2');

   said inner ring (1; 1') being provided with an inner raceway track (1a; 1a') being a mono-hyperboloid of revolution about an axis (6);

   said outer ring (2; 2') being provided with an outer raceway track (2a; 2a') being a mono-hyperboloid of revolution about said axis (6);

   said inner raceway track (1a; 1a') and said outer raceway track (2a; 2a') being faced opposite to each other to form a raceway (8; 8') whose diameter is larger at one end than at the other end;

   the center axis of said intermediate rolling bodies (3) being arranged in a circumferential direction of said raceway at an angle ($\beta$) to a plane including said axis (6), and the surface of said intermediate rolling bodies (3) being arranged so as to come into linear contact with said inner raceway track (1a; 1a') and said outer raceway track (2a; 2a');

   said inner ring (1; 1') or said outer ring (2; 2') rotating only in such a given direction as to roll said intermediate rolling bodies (3) along said inner race-way track (la; 1a') in said one-axis direction towards a small-diameter end of said raceway (8);

   said two single units (20; 20') being arranged so as to face each other in said one-axis direction;

   said pushing means (7) being arranged between said inner rings (1; 1') or said outer rings (2; 2') facing each other in said one-axis direction, to push said inner rings (1 and 1') or said outer rings (2 and 2') in said axial direction so as to narrow down the spacing of said raceway tracks (8; 8'); and

   said outer rings (2 and 2') or said inner rings (1; 1') which are not pushed by said pushing means (7) being stationary so as not to displace in said axial direction, characterised by

said inner ring (1; 1') being provided with a ringlike portion (9) at the small diameter end thereof to stop movements of said intermediate rolling bodies (3) towards said small-diameter end.

**Patentansprüche**

1. Wälzrollenlager mit

    zwei Paar einzelner Einheiten (20; 21), jeweils bestehend aus einem Innenring (1; 1'), einem Außenring (2; 2') und Zwischenrollkörpern (3) mit zylindrischer oder konischer Rollfläche und einem Paar auf den Innenring (1; 1') oder den Außenring (2; 2') wirkender Druckeinheiten (7);

    wobei der Innenring (1; 1') eine innere Laufbahnfläche (1a, 1a') in Form eines Monohyperboloids um eine Achse (6) aufweist;

    wobei der Außenring (2; 2') eine äußere Laufbahnfläche (2a; 2a') in Form eines Monohyperboloids um die Achse (6) aufweist;

    wobei die innere Laufbahnfläche (1a; 1a') und die äußere Laufbahnfläche (2a; 2a') einander zugewandt sind und eine Laufbahn (8; 8') bilden, deren Durchmesser an einem Ende größer ist als am anderen Ende;

    wobei die Mittelachse der Zwischenrollkörper (3) in Umfangsrichtung der Laufbahn angeordnet ist und mit einer die Achse (6) enthaltenden Ebene einen Winkel (β) bildet, und wobei die Oberfläche der Zwischenrollkörper (3) derart angeordnet ist, daß sie mit der inneren Laufbahnfläche (1a; 1a') und mit der äußeren Laufbahnfläche (2a; 2a') linienförmigen Kontakt hat;

    wobei sich der Innenring (1; 1') oder der Außenring (2; 2') nur in einer solchen vorgegebenen Richtung dreht, daß die Zwischenrollkörper (3) auf der inneren Laufbahnfläche (1a; 1a') in axialer Richtung zu einem im Durchmesser kleineren Ende der Laufbahn (8) rollen;

    wobei die beiden einzelnen Einheiten (20; 20') derart angeordnet sind, daß sie einander in axialer Richtung zugewandt sind;

    wobei die Druckeinheit (7) zwischen den Innenringen (1; 1') oder den Außenringen (2; 2') angeordnet ist, die einander in axialer Richtung zugewandt sind, um die Innenringe (1 und 1') oder die Außenringe (2 und 2') in axialer Richtung zu beaufschlagen und die lichte Weite der Laufbahnen (8; 8') zu verengen; und

    wobei die von der Druckeinheit (7) nicht beaufschlagten Außenringe (2 und 2') oder Innenringe (1; 1') ortsfest sind, um sich in axialer Richtung nicht zu verlagern, dadurch gekennzeichnet, daß der Innenring (1; 1') an seinem im Durchmesser kleineren Ende einen ringförmigen Teil (9) aufweist, um die Bewegungen der Zwischenrollkörper (3) in Richtung auf das im Durchmesser kleinere Ende zu begrenzen.

**Revendications**

1. Roulement à rouleau antifriction comprenant :

    deux jeux d'unités simples (20 ; 21) se composant chacune d'un anneau intérieur (1 ; 1'), d'un anneau extérieur (2 ; 2') et de corps de roulement intermédiaires (3) présentant une surface de roulement cylindrique ou conique et un jeu de moyens pousseurs (7) agissant sur ledit anneau intérieur (1 ; 1') ou ledit anneau extérieur (2 ; 2') ;
    ledit anneau intérieur (1 ; 1') étant muni d'un chemin de roulement intérieur (la ; la') qui est un monohyperboloïde de révolution autour d'un axe (6) ;
    ledit anneau extérieur (2 ; 2') étant muni d'un chemin de roulement extérieur (2a ; 2a') qui est un monohyperboloïde de révolution autour dudit axe (6) ;
    ledit chemin de roulement intérieur (1a ; 1a') et ledit chemin de roulement extérieur (2a ; 2a') étant tournés à l'opposé l'un de l'autre afin de former un chemin de roulement (8 ; 8') dont le diamètre est plus important à une extrémité qu'à l'autre extrémité ;
    l'axe central desdits corps de roulement intermédiaires (3) étant agencé dans une direction circonférentielle dudit chemin selon un angle (β) par rapport à un plan comprenant ledit axe (6) et la surface desdits corps de roulement intermédiaires (3) étant agencée de manière à venir en contact linéaire avec ledit chemin de roulement intérieur (1a ; 1a') et ledit chemin de roulement extérieur (2a ; 2a') ;

ledit anneau intérieur (1 ; 1') ou ledit anneau extérieur (2 ; 2') tournant seulement dans une direction donnée pour faire rouler lesdits corps de roulement intermédiaires (3) le long dudit chemin de roulement intérieur (la ; la') dans ladite direction uniaxiale vers une extrémité de petit diamètre dudit chemin de roulement (8) ;

lesdites deux unités simples (20 ; 20') étant agencées afin d'être tournées l'une vers l'autre dans ladite direction uniaxiale ;

lesdits moyens pousseurs (7) étant agencés entre lesdits anneaux intérieurs (1 ; 1') ou lesdits anneaux extérieurs (2 ; 2') tournés l'un vers l'autre dans ladite direction uniaxiale, pour pousser lesdits anneaux intérieurs (1 et 1') ou lesdits anneaux extérieurs (2 et 2') dans ladite direction axiale afin de rétrécir l'espacement desdits chemins de roulement (8 ; 8') ; et

lesdits anneaux extérieurs (2 et 2') ou lesdits anneaux intérieurs (1 ; 1') qui ne sont pas poussés par lesdits moyens pousseurs (7) étant fixes afin de ne pas se déplacer dans ladite direction axiale, caractérisé par

ledit anneau intérieur (1 ; 1') qui est muni d'une partie annulaire (9) au niveau de son extrémité de petit diamètre afin d'arrêter les mouvements desdits corps de roulement intermédiaires (3) en direction de ladite extrémité de petit diamètre.

EP 0 551 516 B1

# F I G. 1

# F I G. 2

# F I G. 3

# F I G. 4

## F I G. 5

## F I G. 6

# F I G. 7

# FIG.8

EP 0 551 516 B1

FIG.9

# F I G. 10

# F I G. 11